# DEMANDE DE BREVET EUROPEEN

(11) **EP 0 679 882 A1**
(43) Date de publication de la demande: **02.11.1995**
(21) Numéro de dépôt: 95400887.6
(22) Date de dépôt: 21.04.1995
(51) Int. Cl.: G01N 21/89

(54) **Procédé et dispositif de détection de défauts débouchant à la surface d'un produit métallurgique**

(30) Priorité: 29.04.1994 FR 9405553
(71) Demandeur: UNIMETAL Société Française des Aciers Longs, F-57120 Rombas (FR)
(72) Inventeur: Le Provost, Marcel, F-57840 Sierck Les Bains (FR)
(74) Mandataire: Ventavoli, Roger

(57) **Abrégé**

Pour détecter ces défauts, on éclaire la surface par deux faisceaux plans (13, 14) de lumière cohérente de longueur d'onde située au voisinage des limites du domaine visible. Les deux faisceaux, générés par exemple par des diodes laser (11, 12), sont situés dans un même plan (P) sensiblement orthogonal à la surface (2) du produit, pour créer. sur la dite surface une seule trace lumineuse (T), et dirigés obliquement l'un vers l'autre avec des angles d'incidence (i) sensiblement égaux. On mesure, selon une direction (18) orthogonale à la dite surface, et à la dite longueur d'onde, l'éclairement le long de la dite trace, par exemple par une caméra (17) à réseau linéaire, une forte réduction localisée de l'éclairement étant révélatrice d'un défaut.

Application à la détection de piqûres ou rayures sur des produits métallurgiques bruts de coulée continue.

## Description

La présente invention concerne un procédé et un dispositif de détection de défauts de surface en creux, débouchants à la surface d'un produit métallurgique et ayant une profondeur relativement grande par rapport à leur section.

Des défauts de ce type se rencontrent en particulier sur des produits métallurgiques bruts de coulée continue, tels que des billettes ou blooms en acier. Ces défauts peuvent être des piqûres, couramment désignées par le terme "pin-holes", constituées par des petits trous cylindriques sensiblement perpendiculaires à la surface, dont le diamètre est de l'ordre de quelques centaines de micromètres, typiquement d'environ 500 µm, et dont la profondeur est de l'ordre de quelques millimètres (typiquement de 1 à 10 mm ou même plus). Il s'agit donc en fait de trous de faible section mais de relativement grande profondeur, dont les parois sont pratiquement perpendiculaires à la surface. De tels défauts résultent classiquement du dégagement, à la surface des billettes, de bulles de gaz piégées dans le métal coulé en lingotière. D'autres défauts ayant également une petite dimension transversale par rapport à leur profondeur sont générés par exemple par des grippages de galets de guidage en aval de la lingotière et apparaissent sous forme de rainures s'étendant dans la direction longitudinale du produit coulé.

De tels défauts sont rédhibitoires pour la qualité des produits obtenus, et doivent être supprimés, par exemple par meulage, avant que ce produit ne soit laminé. Il est donc nécessaire de les détecter, de les localiser et d'en estimer leurs dimensions. Un problème est que ces défauts, du fait de leur petite dimension transversale ne sont en général pas ou mal détectés par les procédés couramment utilisés pour la détection de défauts sur de tels produits, basés sur des méthodes magnétiques ou par courants de Foucault.

De plus ces défauts sont petits par rapport aux irrégularités de surface des produits bruts de coulée continue, irrégularités constituées par des reliefs, ou bosses, pouvant atteindre 3 mm de hauteur.

Il a déjà été tenté, en laboratoire, de détecter ces défauts en éclairant la surface par un éclairage blanc monté en couronne et éclairant la surface en incidence rasante, les défauts apparaissant, lors de de l'observation de la surface, comme des zones d'éclairement réduit par rapport à l'éclairement général de la surface. Une telle méthode s'est cependant révélée inapplicable en milieu industriel, du fait des grandes dimensions de l'équipement nécessaire, et du fait que la détection des défauts ne pouvait être réalisée dans des conditions de rapidité satisfaisante pour une utilisation en ligne, lors du défilement des produits coulés. De plus des variations inévitables de l'éclairement ambiant provoquent soit la non détection de certains défauts, soit la détection de "faux défauts".

La présente invention a pour but de remédier aux problèmes précités et de permettre la détection de défauts tels que piqûres ou fines rayures sur des produits à surface irrégulière, de manière fiable et compatible avec les exigences d'une détection, d'une caractérisation et d'un repérage des défauts dans des conditions industrielles.

Avec ces objectifs en vue, l'invention a pour objet un procédé de détection de défauts en creux à la surface d'un produit métallurgique, tel qu'un produit brut de coulée continue, du type selon lequel on éclaire la surface avec une incidence non nulle, pour révéler les défauts qui apparaissent comme des zones d'éclairement réduit par rapport à l'éclairement de la surface, caractérisé en ce qu'on éclaire la surface par deux faisceaux plans de lumière de longueur d'onde située au voisinage des limites du domaine visible, les deux faisceaux étant situés dans un même plan sensiblement orthogonal à la dite surface, pour créer sur celle-ci une seule trace lumineuse, et dirigés obliquement l'un vers l'autre avec des angles d'incidence sensiblement égaux, et on mesure, sous la dite longueur d'onde, et selon une direction de visée orthogonale à ladite surface, l'éclairement le long de ladite trace, une forte réduction localisée de l'éclairement étant révélatrice d'un défaut.

La combinaison des deux faisceaux permet d'assurer en l'absence de défauts un éclairement sensiblement uniforme de la surface sur la longueur de la trace en évitant de créer des ombres en cas de présence d'aspérités ou d'irrégularités de surface en relief. Par contre en présence de défauts du type de ceux que l'on souhaite détecter, c'est-à-dire de piqûres ou creux profonds par rapport à leur dimension transversale, les faisceaux lumineux n'éclairent pas le fond de ces trous, et comme la direction d'observation est sensiblement perpendiculaire à la surface observée, ces défauts apparaissent sous forme de zones sombres dans ladite trace. Ainsi, on peut détecter, de manière fiable et rapide lors du défilement du produit, tous les défauts de types piqûres, en excluant la détection d'autres irrégularités de surface. De plus en travaillant à une longueur d'onde située au voisinage des limites du rayonnement visible, préférentiellement entre 650 et 670 nm, on évite que la détection soit perturbée par d'éventuelles variations de l'éclairement ambiant.

L'invention a aussi pour objet un dispositif de détection de défauts en creux à la surface d'un produit métallurgique, caractérisé en ce qu'il comprend deux sources de lumière de longueur d'onde prédéterminée voisine des limites du domaine visible, émettant des faisceaux plats ayant des directions générales d'émission concourantes et disposées de manière que ces faisceaux soient situés dans un même plan sensiblement orthogonal à une direction longitudinale de défilement du dit produit, et des moyens de mesure de l'éclairement de la surface par les dites sources, dans une direction de visée située dans ledit plan et perpendiculaire à la dite surface, pourvus d'un filtre centré sur ladite longueur d'onde, les directions des dites sources étant symétriques par rapport à ladite direction de visée.

D'autres caractéristiques et avantages de l'invention apparaîtront dans la description qui va être faite à titre d'exemple d'un dispositif de détection de piqûres sur des billettes en acier brutes de coulée continue, et de sa mise en oeuvre.

On se reportera aux dessins annexés dans lesquels :
- la figure 1 est une vue en perspective d'un dispositif de détection de piqûres conforme à l'invention, pendant une opération de détection ;
- la figure 2 est une vue- en coupe à échelle agrandie d'une zone de surface comportant une telle piqûre, lors de la détection ;
- la figure 3 est une représentation de l'image vue par la caméra du dispositif ;
- la figure 4 est une représentation du signal, correspondant à l'image de la figure 3, émis par les photodiodes de la caméra.

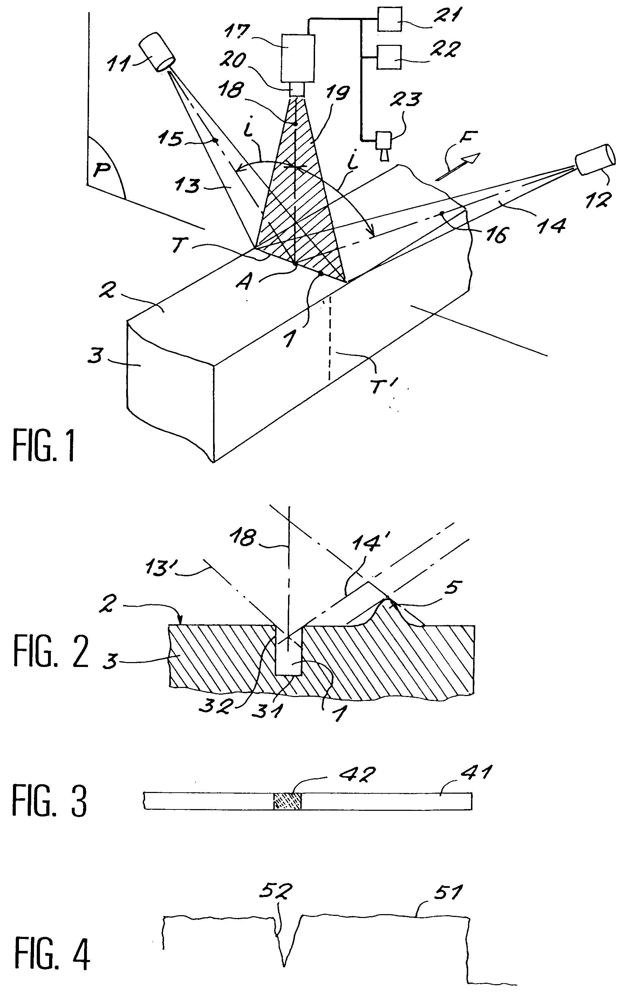

Sur le dessin de la figure 1, on a représenté schématiquement le dispositif de détection mis en oeuvre pour la détection de piqûre 1 sur une face 2 d'une billette en acier 3, en défilement selon sa direction longitudinale (flèche F).

Le dispositif comporte deux sources de lumière cohérente, constituées par des diodes laser 11, 12 émettant des faisceaux plats 13, 14 dont les directions générales, représentées par les tracés en traits mixtes 15, 16 sont concourantes en un point A situé sensiblement sur la surface 2, vers le milieu de sa largeur. Le dispositif comporte aussi des moyens de mesure de l'éclairement de la surface 2 provoqué par les dits faisceaux, constitués par une caméra 17 à réseau linéaire de photodiodes, ou caméra CCD linéaire.

La direction de visée 18 de la caméra 17 est orthogonale à la surface 2 et passe par le point A. La distance de la caméra à la surface 2 est choisie suffisante pour que son champ de mesure (zone hachurée 19) ait un angle suffisamment faible, compte tenu de la largeur de la surface 2, pour que la direction d'observation puisse être considérée orthogonale à la surface 2 sur toute cette largeur.

Les deux diodes laser 11, 12 et la caméra 17 sont situées dans un même plan P sensiblement orthogonal à la direction de défilement F, le deux faisceaux 13 et 14 étant également situés dans ce plan, de même que le réseau de photodiodes de la caméra.

Les diodes laser 11, 12 émettent préférentiellement dans une longueur d'onde compris entre 650 et 670 nm. On pourrait également utiliser des sources émettant dans des longueurs d'onde situées vers l'autre extrémité du spectre visible, par exemple 365 nm, telles que des lampes de WOOD.

L'utilisation de diodes laser présente cependant les avantages de travailler dans des longueurs d'onde sans risques pour le personnel, d'un encombrement réduit et d'une consommation énergétique très faible, la puissance de telles diodes étant de l'ordre de 20 mW. L'éclairement fourni par ces diodes laser est suffisant pour des surfaces à contrôler ayant une largeur de quelques dizaines de centimètres. Pour des produits de plus grande dimension, on peut utiliser des générateurs laser de plus forte puissance.

La caméra 17 est équipée d'un filtre 20 centré sur la longueur d'onde des diodes laser, de manière à ne capter que le rayonnement issu de ces diodes et réfléchi par la surface 2, à l'exclusion de tout autre rayonnement de lumière ambiante.

La caméra 17 est par exemple une caméra linéaire à 2 048 points à balayage rapide (500 µs) Ainsi pour une vitesse de défilement du produit de 50 cm/s, on peut obtenir une résolution de 500 µm (correspondant à la distance de déplacement du produit entre deux mesures successives), ce qui permet d'assurer une détection fiable des défauts présentant une dimension transversale de cet ordre de grandeur.

Par ailleurs, pour obtenir un rapport signal/bruit acceptable, et éviter les fausses alarmes, il est nécessaire de faire fonctionner les cellules photodiodes de la caméra 17 à la limite de la saturation. De ce fait, si l'on n'utilisait pas des sources lumineuses de longueur d'onde adaptées, conformément à l'invention, et un filtre correspondant sur la caméra, ces cellules deviendraient très sensibles à des variations minimes de l'éclairement ambiant qui généreraient de fausses alarmes ou éblouiraient les cellules et les rendraient inopérantes. L'utilisation de lumière cohérente dans des longueurs d'onde proches des limites du domaine visible et faibles dans un éclairement ambiant blanc habituel, et l'utilisation de filtres passe bande adaptés sur l'objectif de la caméra font que le dispositif n'est pas susceptible d'être perturbé par des variations du dit éclairement ambiant.

L'angle d'incidence i des faisceaux émis par les diodes laser est préférentiellement de 30 à 60°, notamment voisin de 40°. Comme on le comprendra mieux au vu de la figure 2, cet angle doit être déterminé en fonction des caractéristiques dimensionnelles des défauts que l'on souhaite détecter.

Sur cette figure, on a représenté en coupe à grande échelle une piqûre 1, qui se présente sous la forme d'un trou sensiblement cylindrique. Lorsque cette piqûre passe dans le plan P des faisceaux 13 et 14, les rayons 13', 14' ne parviennent pas au fond 31 du trou qui reste donc dans l'ombre et forme une discontinuité dans la trace T créée sur la surface 2 par les faisceaux 13, 14. En fait, cette trace se poursuit sur les bords 32 de la piqûre 1 mais comme ces bords sont, dans le cas d'une piqûre, sensiblement perpendiculaires à la surface 2 du produit, et que la direction de visée 18 de la caméra est également perpendiculaire à cette surface, la caméra 17 ne perçoit pas de rayonnement à l'endroit du défaut. On comprendra aisément qu'il en serait de même si les bords 32 étaient évasés, dans la mesure où, compte-tenu de l'inclinaison de ces bords et de l'angle d'incidence i, les rayons incidents ne parviennent pas au fond du trou 1. Inversement, si la profondeur du trou 1 est relativement faible par rapport à sa dimension transversale, et si l'angle d'incidence i est faible, le fond du trou peut être au moins partiellement éclairé, et un tel défaut risque de ne pas être détecté. En augmentant l'angle d'incidence i, on augmentera donc la sensibilité de la détection. Par ailleurs, comme on le voit sur la partie droite de la figure 2 où on a représenté une irrégularité de surface constituée par une bosse 5, quel que soit l'angle d'incidence, cette bosse est éclairée sur ses deux faces par au moins l'un des faisceaux 13, 14, et ne sera donc pas détectée.

Pratiquement, si l'angle d'incidence i dépasse environ 60°, la détection devient très sensible mais présente le risque que des aspérités génèrent de fausses alarmes du fait que des ombres de ces aspérités peuvent apparaître. Si, par contre, l'angle d'incidence i est diminué en-dessous d'environ 30°, la sensibilité décroît rapidement, par le fait que le fond des trous risque plus d'être éclairé.

A la figure 3, on a représenté l'image 41 de la trace T, vue par la caméra en présence de la piqûre 1, où celle-ci apparaît sous forme d'une zone sombre 42. Le signal électrique 51 correspondant étant représenté sur la figure 4 où la présence de la piqûre est repérée par une réduction importante 52 de ce signal.

On notera que en l'absence de défaut, ce signal est sensiblement constant sur toute la partie correspondant à la largeur de la surface du produit. En effet, bien que la répartition de l'énergie lumineuse issue d'une diode laser et reçue par la surface 2 ne soit pas symétrique par rapport au point central A, du fait de l'inclinaison du faisceau, la combinaison des deux faisceaux conduit à rétablir cette symétrie et à assurer un lissage de l'énergie réfléchie en tout point de la trace T. Ainsi, en combinaison avec le fait que les photodiodes de la caméra fonctionnent à proximité de la saturation, le signal émis par les photodiodes est sensiblement constant, en l'absence de piqûres, sur toute la longueur du réseau, ce qui assure une sensibilité de détection constante, que la piqûre soit vers le centre ou vers les bords de la surface 2.

Selon une disposition particulière de l'invention, on ne valide la détection que lorsque ladite réduction d'éclairement est perçue à une même position sur ladite trace lors de deux mesures successives effectuées au cours du défilement du produit. Ainsi, compte tenu que deux mesures successives sont très proches dans le temps, et qu'en conséquence un même défaut apparaît nécessairement lors de deux mesures successives effectuées au cours du défilement du produit, on évite de considérer comme défauts d'éventuels parasites de la détection.

Selon une autre disposition, on détermine la dimension transversale du défaut détecté par une mesure, sur un signal 51 représentatif de l'éclairement le long de ladite trace, de la largeur du signal 52 correspondant à ladite réduction d'éclairement.

Préférentiellement, pour pouvoir mesurer la dimension transversale du défaut, le dispositif comporte des moyens 21 de comptage du nombre de photodiodes adjacentes soumises à un éclairement d'intensité inférieure à un seuil prédéterminé. De manière similaire, des moyens 22 de repérage de la position de ces photodiodes dans le réseau permettent de déterminer la position transversale de chaque défaut détecté. Par ailleurs sont prévus des moyens 23 d'indication sur le produit de la position longitudinale de chaque défaut, tels qu'un système de marquage par peinture sur le produit, commandé par le dispositif de détection et situé en aval de celui-ci par rapport au sens de défilement du produit.

De tels moyens permettent d'une part, de localiser les défauts sur le produit en vue de leur réparation, ou encore d'établir un état statistique des défauts sur l'ensemble du produit, constituant un indice de qualité de ce dernier.

Selon une variante préférée, la détection est effectuée simultanément sur toutes les faces du produit, un dispositif de détection tel que décrit précédemment étant dévolu pour chaque face. Dans ce cas, ces dispositifs sont décalés longitudinalement, de manière que les faisceaux relatifs à deux faces n'interfèrent pas, les traces T, T' des faisceaux sur deux faces adjacentes étant par exemple décalées d'environ 10 mm.

## Revendications

**1)** Procédé de détection de défauts (1) en creux à la surface (2) d'un produit métallurgique, tel qu'un produit brut de coulée continue, du type selon lequel on éclaire la surface avec une incidence non nulle, pour révéler les défauts qui apparaissent comme des zones d'éclairement réduit par rapport à l'éclairement de la surface, caractérisé en ce qu'on éclaire la surface par deux faisceaux plans (13, 14) de lumière de longueur d'onde située au voisinage des limites du domaine visible, les deux faisceaux étant situés dans un même plan (P) sensiblement orthogonal à la dite surface (2), pour créer sur ladite surface une seule trace lumineuse (T), et dirigés obliquement l'un vers l'autre avec des angles d'incidence (i) sensiblement égaux, et on mesure, sous la dite longueur d'onde, et selon une direction (18) orthogonale à ladite surface, l'éclairement le long de ladite trace, une forte réduction localisée de l'éclairement étant révélatrice d'un défaut.

**2)** Procédé selon la revendication 1, caractérisé en ce que ladite longueur d'onde est comprise entre 650 et 670 nm.

**3)** Procédé selon l'une des revendications 1 ou 2, caractérisé en ce que l'angle d'incidence (i) est compris entre 30 et 60°.

**4)** Procédé selon l'une des revendications 1 à 3, caractérisé en ce qu'on ne valide la détection que lorsque ladite réduction d'éclairement est perçue à une même position sur ladite trace lors de deux mesures successives effectuées au cours du défilement du produit.

**5)** Procédé selon l'une des revendications 1 à 4, caractérisé en ce qu'on détermine la dimension transversale du défaut détecté, par une mesure, sur un signal (51) représentatif de l'éclairement le long de ladite trace, de la largeur du signal (52) correspondant à ladite réduction d'éclairement.

**6)** Procédé selon l'une des revendications 1 à 5, caractérisé en ce qu'on l'applique simultanément à plusieurs faces du produit, les traces (T, T') de chaque face étant décalées longitudinalement.

**7)** Dispositif de détection de défauts (1) en creux à la surface (2) d'un produit métallurgique (3), caractérisé en ce qu'il comprend deux sources (11, 12) de lumière de longueur d'onde prédéterminée voisine des limites du domaine visible, émettant des faisceaux plats (13, 14) et ayant des directions générales d'émission (15, 16) concourantes et disposées de manière que ces faisceaux soient situés dans un même plan (P) sensiblement orthogonal à une direction longitudinale (F) de défilement du dit produit, et des moyens (17) de mesure de l'éclairement de la surface par les dites sources, dans une direction de visée (18) située dans ledit plan (P), pourvus d'un filtre (20) centré sur ladite longueur d'onde, les directions (15, 16) des dites sources étant symétriques par rapport à ladite direction de visée (18).

**8)** Dispositif selon la revendication 7, caractérisé en ce que l'angle (i) entre la direction des sources et la direction de visée est compris en 30 et 60°.

**9)** Dispositif selon l'une des revendications 7 ou 8, caractérisé en ce que ladite longueur d'onde est compris entre 650 et 670 nm.

**10)** Dispositif selon l'une des revendications 7 à 10, caractérisé en ce que les dites sources (11, 12) sont des diodes laser.

**11)** Dispositif selon l'une des revendications 7 à 10, caractérisé en ce que les moyens de mesure de l'éclairement comportent une caméra (17) à réseau linéaire de photodiodes, et en ce qu'il comporte des moyens (21) de comptage du nombre de photodiodes adjacentes soumises à un éclairement d'intensité inférieure à un seuil prédéterminé, des moyens (22) de repérage de la position de ces photodiodes dans ledit réseau, et des moyens (23) d'indication sur le produit de la position longitudinale des défauts détectés.

**12)** Ensemble de détection de défauts sur toutes les faces d'un produit métallurgique, caractérisé en ce qu'il comprend.un dispositif selon l'une des revendications 7 à 11 par face, ces dispositifs étant décalés longitudinalement.
